# EUROPEAN PATENT APPLICATION

(11) **EP 1 662 300 A1**
(43) Date of publication of application: **31.05.2006**
(21) Application number: 05257193.2
(22) Date of filing: 22.11.2005
(51) Int. Cl.: G02F 1/13

(54) **Active matrix display device and method for manufacturing the same**

(30) Priority: 24.11.2004 JP 2004338904; 16.11.2005 JP 2005332182
(71) Applicant: Sanyo Electric Co., Ltd, Moriguchi-shi, Osaka (JP)
(72) Inventor: Oda, Nobuhiko, Hashima-shi Gifu (JP); Yamada, Tsutomu, Mizuho-shi Gifu (JP)
(74) Representative: Cross, Rupert Edward Blount

(57) **Abstract**

A protection film (12) on connection wiring (10) is partly removed. The connection wiring (10), made of a material identical with that of a data line DL, is exposed at a portion (18) where the protection film (12) is removed. A bump (26a) is connected to the exposed connection wiring (10).

## Description

### CROSS-REFERENCE TO RELATED APPLICATIONS

The entire disclosures of Japanese Patent Application Nos. 2004-338904 and 2005-332182 including specification, claims, drawings and abstract are incorporated herein by reference.

### BACKGROUND OF THE INVENTION

### 1. Field of the Invention

The present invention relates to an active matrix display device having a COG (chip on glass) terminal area directly connected to another semiconductor integrated circuit at a peripheral portion, and also relates to a method for manufacturing the active matrix display device.

### 2. Description of the Related Art

Active matrix display devices widely used for a liquid crystal panel or a comparable display panel are characterized in that a thin-film transistor is disposed in each pixel for controlling the display of the pixel.

In such a display panel, an externally applied data signal (i.e., video signal) is supplied to a pixel. More specifically, a data line extending in a vertical direction and a selection (i.e., gate) line extending in a horizontal direction are provided. The control for supplying a data signal to each pixel is performed by selecting a gate line of an intended pixel while the data signal is supplied to a corresponding data line. Accordingly, data supply to a data line and selection of a gate line are essentially required to realize the display of an intended pixel. This is the reason why both a vertical driver and a horizontal driver are required.

In some display devices, both a vertical driver and a horizontal driver are incorporated in a display panel. However, a horizontal driver is required to execute relatively speedy processing so that during one horizontal period a data signal is supplied to the data line of each column.

To this end, there is another type of display device according to which a horizontal driver is provided in an external semiconductor integrated circuit (referred to as a horizontal driver IC). The horizontal driver IC directly supplies a data signal to each data line.

In this case, arranging each data line extending to a peripheral portion of a panel and connecting the data line via an ACF (anisotropic conductive film) to a terminal of the horizontal driver IC is preferable. This is generally referred to as a COG (chip on glass) structure.

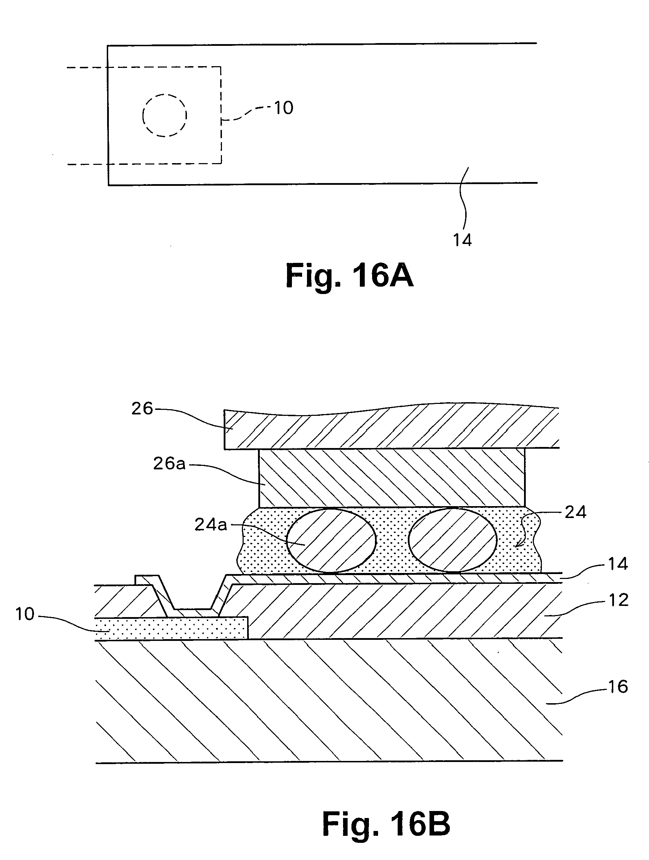

Figs. 16A and 16B show a conventional example of the COG structure. A connection wiring 10, connected to a data line DL, is covered with a protection film 12. The protection film 12 is an insulating film. The protection film 12 is partly removed to form a contact hole. A transparent conductive film 14 is formed, extending along a surface of the protection film 12 including an inside wall and a bottom of the contact hole. The transparent conductive film 14 is brought into contact with the connection wiring 10 at a portion where the protection film 12 is removed (i.e., at the bottom of the contact hole). A portion usable as a terminal area of the COG structure is positioned on the protection film 12 covering the connection wiring 10. The terminal area of the COG structure is above a TFT substrate 16 on which a thin-film transistor (TFT) of each pixel is formed.

The protection film 12 is a flattening film covering a thin-film transistor provided in each pixel. Each pixel includes a transparent conductive member, such as a pixel electrode constructed from IZO, formed on the flattening film. The transparent conductive film 14 is a film identical with the pixel electrode.

In this manner, utilizing the flattening film and the transparent conductive film 14 formed in a pixel area enables elimination of an additional process for forming a terminal area of the COG structure. For example, using a transparent conductive film as a terminal area is disclosed in Japanese Patent Laid-open Publication No. Hei 06-180460.

However, a problem arising in this case is that a contact resistance becomes larger with respect to a connection of the transparent conductive film and the ACF. In particular, this problem is significant in a case where the IZO is used for a terminal area of the COG structure.

Furthermore, as the flattening film is relatively soft, using a connecting method applying a pressure on the ACF is not effective.

### SUMMARY OF THE INVENTION

In view of the above problems, the present invention has an object to provide an excellent active matrix display device having a COG (chip on glass) terminal area directly connected to another semiconductor integrated circuit at a peripheral portion, and also provide a method for manufacturing the active matrix display device.

In order to accomplish the above and other related objects, the present invention provides an active matrix display device including: a COG terminal area directly connected to an external semiconductor integrated circuit at a peripheral portion of the display device; connection wiring electrically connected to internal wiring connected to a pixel provided in a display panel, the connection wiring being aluminum or aluminum alloy wiring disposed at a peripheral portion of the panel; a wiring protection film covering the connection wiring; and an opening formed at a portion corresponding to a terminal area of the wiring protection film.

Furthermore, the present invention provides a method for manufacturing an active matrix display device having a COG terminal area directly connected to an external semiconductor integrated circuit at a peripheral portion of the display device, including the steps of: forming connection wiring electrically connected to internal wiring connected to a pixel provided in a display panel, the connection wiring being aluminum or aluminum alloy wiring disposed at a peripheral portion of the panel; covering the connection wiring with a wiring protection film; and forming an opening at a portion corresponding to a terminal area of the wiring protection film.

According to the present invention, an aluminum or aluminum alloy (preferably, Al-Nd) wiring is used in a terminal area of the COG structure. Therefore, the contact resistance can be reduced in the connection using such a COG structure. Furthermore, forming a terminal area according to the present invention only requires removing an insulating film. Thus, the rigidity of the terminal area is sufficient.

The above and other objects, features and advantages of the present invention will become more apparent from the following detailed description of an exemplary embodiment with reference to the attached drawings.

### BRIEF DESCRIPTION OF THE DRAWINGS

The accompanying drawings, which are incorporated in and constitute a part of the specification, illustrate an embodiment of the invention and, together with the description, serve to explain the principles of the invention, in which:
Fig. 1A is a plan view showing a terminal area in accordance with one embodiment of the present invention;
Fig. 1B is a cross-sectional view showing the terminal area in accordance with the embodiment of the present invention;
Fig. 2 is a circuit diagram showing a pixel circuit in accordance with the embodiment of the present invention;
Fig. 3 is a cross-sectional view showing a pixel area in accordance with the embodiment of the present invention, taken along a line A-A' of Fig. 4;
Fig. 4 is a plan view showing the pixel area in accordance with the embodiment of the present invention;
Fig. 5 is a flowchart showing manufacturing processes in accordance with the embodiment of the present invention;
Fig. 6 is a view showing a relationship between data lines and connection wiring in accordance with the embodiment of the present invention;
Figs. 7A and 7B are cross-sectional views showing the state of a pixel area and a COG terminal area in a manufacturing process in accordance with the embodiment of the present invention;
Figs. 8A and 8B are cross-sectional views showing the state of the pixel area and the COG terminal area in another manufacturing process in accordance with the embodiment of the present invention;
Figs. 9A and 9B are cross-sectional views showing the state of the pixel area and the COG terminal area in another manufacturing process in accordance with the embodiment of the present invention;
Figs. 10A and 10B are cross-sectional views showing the state of the pixel area and the COG terminal area in another manufacturing process in accordance with the embodiment of the present invention;
Figs. 11A and 11B are cross-sectional views showing the state of the pixel area and the COG terminal area in another manufacturing process in accordance with the embodiment of the present invention;
Figs. 12A and 12B are cross-sectional views showing the state of the pixel area and the COG terminal area in another manufacturing process in accordance with the embodiment of the present invention;
Figs. 13A and 13B are cross-sectional views showing the state of the pixel area and the COG terminal area in another manufacturing process in accordance with the embodiment of the present invention;
Figs. 14A and 14B are cross-sectional views showing the state of the pixel area and the COG terminal area in another manufacturing process in accordance with the embodiment of the present invention;
Figs. 15A and 15B are cross-sectional views showing the state of the pixel area and the COG terminal area in another manufacturing process in accordance with the embodiment of the present invention;
Fig. 16A is a plan view showing a conventional terminal area; and
Fig. 16B is a cross-sectional view showing the conventional terminal area.

### DESCRIPTION OF PREFERRED EMBODIMENT

Hereinafter, one embodiment of the present invention will be described with reference to the drawings.

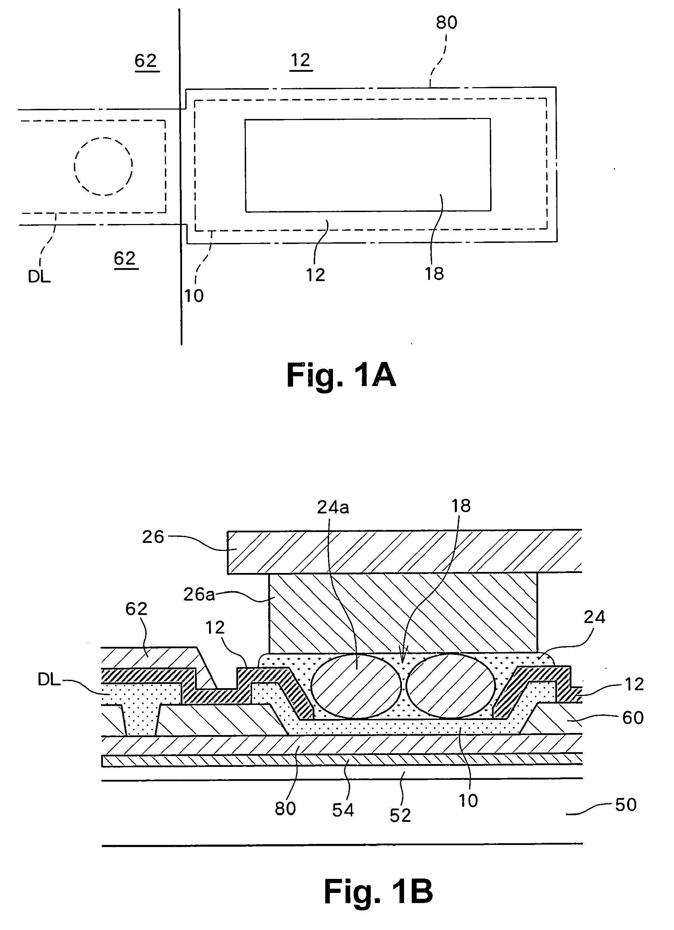

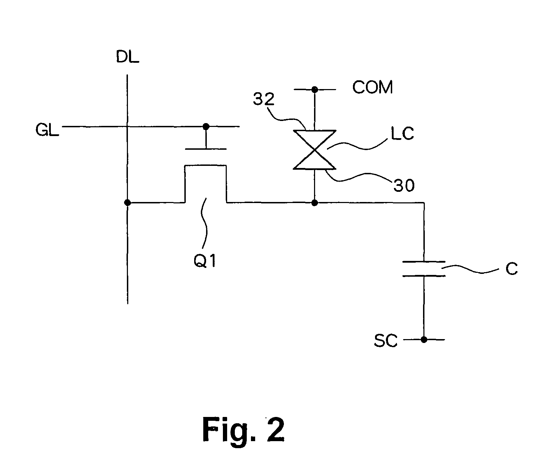

Fig. 1A is a plan view showing a COG (chip on glass) terminal area in accordance with one embodiment of the present invention. Fig. 1B is a cross-sectional view showing the COG terminal area shown in Fig. 1A. In Fig.1A, molybdenum wiring 80 is shown by chain line. Furthermore, Fig. 2 shows a status after a horizontal driver IC 26 is set.

A data line DL, formed on an interlayer insulating film 60, extends close to a peripheral portion and terminates in front of a COG terminal area. The interlayer insulating film 60 has a contact hole formed at a portion corresponding to the terminal end of the data line DL. The data line DL is connected to underlying molybdenum wiring 80 via the contact hole. The molybdenum wiring 80 extends into the COG terminal area where connection wiring 10 is formed on the molybdenum wiring 80. The molybdenum wiring 80 and a later-described gate electrode (i.e., gate line) are formed together in the same process.

A protection film 12 is formed extensively on upper surfaces of the connection wiring 10, the data line DL, and the interlayer insulating film 60 positioned between the connection wiring 10 and the data line DL.

The interlayer insulating film 60 is a laminate film of SiO₂/SiN. The data line DL has a three-layer structure consisting of layers of molybdenum (Mo), aluminum neodymium (Al/Nd), and molybdenum (Mo). The connection wiring 10 is identical with the data line DL in structure. The protection film 12 is constructed from a silicon nitride film expressed in the form of SiNx.

The protection film 12 is partly removed to form a removed portion 18 where the connection wiring 10 is exposed. The removed portion 18 is relatively large. An exposed portion of the connection wiring 10 positioned in the removed portion 18 has a significant area. Hence, an anisotropic conductive film (ACF) 24 is placed on the exposed portion of the connection wiring 10 corresponding to the bottom portion of the removed portion 18. The ACF 24 is depressed with a bump 26a attached to a lower surface of a horizontal driver IC 26. The ACF 24 is, for example, a thermoset resin member containing conductive particles (e. g. , plastic balls covered with a metallic coating) 24a.

At a pressed portion, the conductive particles 24a can directly contact with the bump 26a and the connection wiring 10, or the conductive particles 24a can contact with each other. Thus, the bump 26a is electrically connected with the connection wiring 10 via the ACF 24. However, the ACF 24 has no conductivity at a portion where no pressure is applied. Hence, the ACF 24 completely covers the portion to be connected (i.e., plural COG terminal areas corresponding to plural terminals (bumps) of the horizontal driver IC). Only the portion being pressed by the bump 26a is conductive. The bump 26a can contain gold.

Although Fig. 1B shows the ACF 24 consisting of a single row of conductive particles 24a, it is possible to provide an ACF 24 consisting of two rows of conductive particles 24a stacked in the thickness direction. In this case, the conductive particles 24a contact with each other to establish an electrical path between the bump 26a and the connection wiring 10.

Furthermore, according to this example, the connection wiring 10 is connected to the data line DL. However, The connection wiring 10 can be connected to a power line or other wiring as long as the connection wiring 10 is wiring extending from a pixel area and connected to another semiconductor integrated circuit so as to form a COG connection. Furthermore, an ON/OFF switch for the data signal can be provided somewhere in the data line DL.

Furthermore, except for the peripheral portion, a flattening film 62 is provided on the protection film 12. The flattening film 62 is present on the protection film 12 covering the data line DL.

Fig. 2 is a circuit diagram showing an arrangement of a pixel circuit. The data line DL extends in a vertical direction (referred to as "column direction") of a liquid crystal panel. One data line DL is provided for one column. A gate line GL extends in a horizontal direction (referred to as "row direction") of the liquid crystal panel. One gate line GL is provided for one row. Furthermore, one SC line extending in the row direction is provided for one row.

The data line DL is connected to a drain of a selecting transistor Q1. The selecting transistor Q1 is an n-channel TFT. The selecting transistor Q1 has a source connected to one end of a pixel electrode 30 and to one end of a holding capacitor C. The other electrode of the holding capacitor C is connected to the SC line SC. The pixel electrode 30 is opposed to a common electrode 32 extensively provided for all pixels. A liquid crystal LC is disposed between the pixel electrode 30 and the common electrode 32.

Respective gate lines GL are successively selected at the intervals of one horizontal period. A selected gate line GL is activated (i.e., maintained at an H level). A selecting transistor Q1, having a gate connected to the selected gate line GL, is turned on. Meanwhile, the data line DL supplies a data voltage for a pixel selected by the selecting transistor Q1 being turned on. Accordingly, the holding capacitor C of each pixel of the selected row is charged with the data voltage given for the pixel. The data voltage stored in the holding capacitor C is applied to a liquid crystal LC of the pixel. This is a principle of the liquid crystal display. During successive selections among plural gate lines GL, one pixel continues the display based on the latest written data voltage until a new data voltage is written in the next frame.

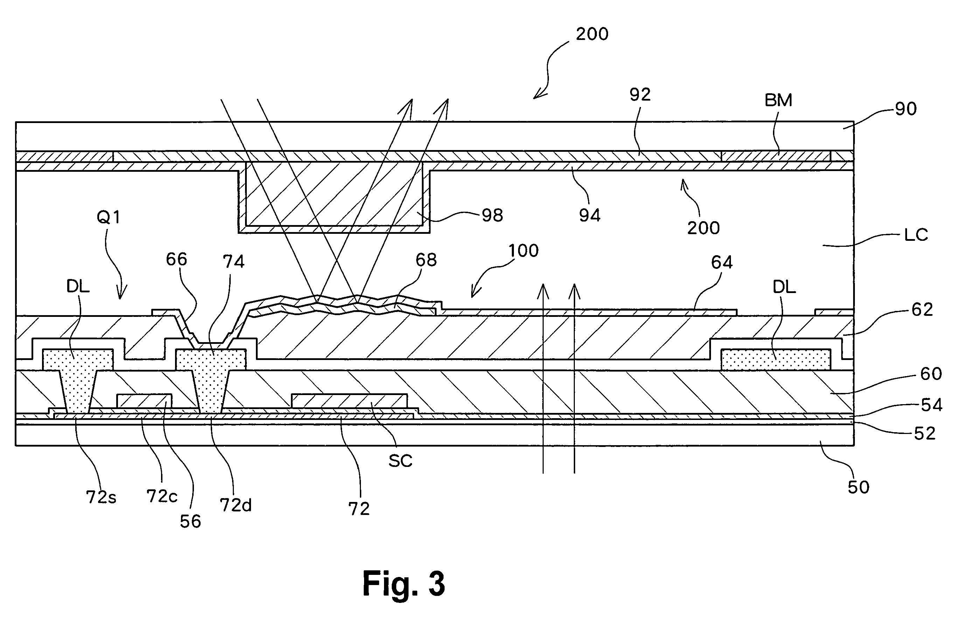

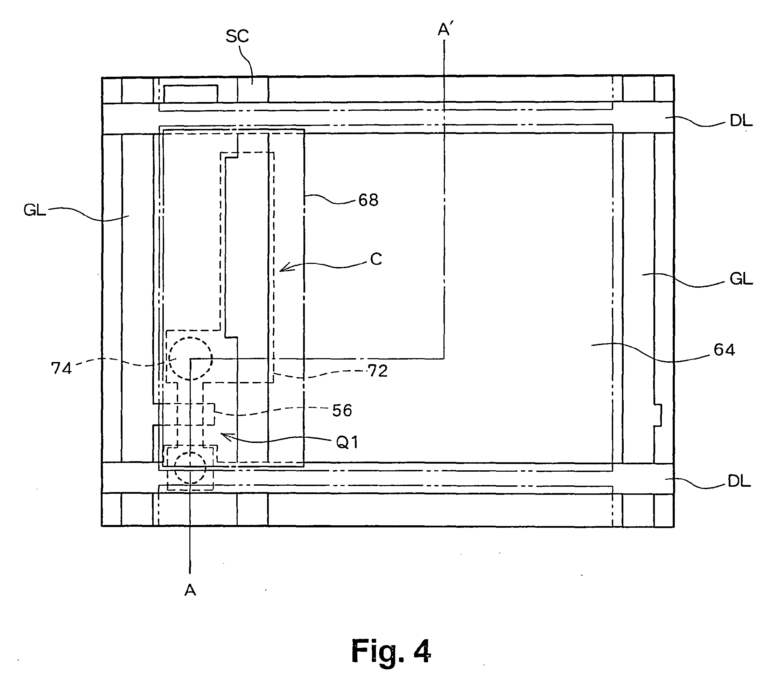

Fig. 3 shows a cross-sectional arrangement of a pixel area. Fig. 4 shows a plan view of the pixel area. A buffer layer 52, consisting of a two-layer laminate film of SiO₂/SiN, is disposed on a glass substrate 50. A semiconductor layer 72 is formed at a predetermined position on the buffer layer 52. According to the embodiment, the semiconductor layer 72 is made of polysilicon. A gate insulating film 54, consisting of a two-layer laminate film of SiN/SiO₂, is formed on the semiconductor layer 72 and the buffer layer 52.

A gate electrode 56, positioned above a central portion of the semiconductor layer 72, is formed on the gate insulating film 54. The embodiment discloses a single gate type TFT that has the capability of functioning as the selecting transistor Q1. Only one gate electrode 56 is formed. However, in the case of using a double gate type TFT, two gate electrodes 56 are formed. According to the embodiment, the gate electrode 56 protrudes in a horizontal direction from a predetermined portion of the gate line GL. The semiconductor layer 72 includes a channel region 72c positioned under the gate electrode 56. A drain region 72d and a source region 72s are provided on both sides of the channel region 72c. The channel region 72c, the drain region 72d, and the source region 72s cooperatively constitute the selecting transistor Q1.

The interlayer insulating film 60, made of a laminate film of SiO₂/SiN extends along upper surfaces of the gate electrode 56 and the gate insulating film 54. A drain electrode (or a source electrode) 74, formed on the interlayer insulating film 60, is positioned above the drain region (or the source region) 72d. The drain electrode 74 is directly connected to the drain region 72d via a contact vertically extending across the interlayer insulating film 60 and the gate insulating film 54. The source region 72s is connected to the data line DL via a contact. The data line DL functions as a source electrode.

The semiconductor layer 72 extends in the horizontal direction from the drain region 72d. The extended portion of the semiconductor layer 72 is opposed to the SC line SC via the gate insulating film 54. The extended portion of the semiconductor film 72, the SC line SC, and the gate insulating film 54 intervening between the extended portion of the semiconductor film 72 and the SC line SC cooperatively constitute the holding capacitor C.

The protection film 12, made of SiNx (silicon nitride), covers upper surfaces of the drain electrode 74, the interlayer insulating film 60, and the data line DL. The flattening film 62, made of an acrylic resin or the like, is formed on the protection film 12. A contact hole vertically extending across the protection film 12 and the flattening film 62 is formed on the drain electrode 74. A pixel electrode 64 of ITO, IZO or the like, having a contact formed in this hole, is formed.

According to the embodiment, the panel is a semitransmissive type. A reflection film 68 is provided on the flattening film 62 and is positioned under the pixel electrode 64. A space for the reflection film 68 is approximately one third of the area for a pixel. In the case of a reflection type panel, the reflection film 68 extends entirely under the pixel electrode 64. The reflection film 68 of the flattening film 62 has an uneven surface so that the light can be reflected from the reflection film 68 at a wide angle.

An opposing substrate 200 is disposed over the TFT substrate 100 having the above-described arrangement. The liquid crystal LC intervenes between the TFT substrate 100 and the opposing substrate 200.

The opposing substrate 200 includes a glass substrate 90 and a color filter 92 disposed on a lower (i.e., inner) surface of the glass substrate 90. The color filter 92 has a black matrix BM defining the boundary of a pixel. Each color filter 92 is classified into one of three kinds of filter for RGB colors. Selection of color from RGB for the filter 92 is dependent on the attribute of a pixel.

An opposed electrode 94 is formed on a lower (i.e., inner) surface of the color filter 92. The opposed electrode 94 is common for all pixels. The opposed electrode 94 is similar to the pixel electrode 64 in arrangement, and is accordingly constructed from IZO or ITO. Furthermore, a thickness adjusting layer 98 is provided between the color filter 92 and the opposed electrode 94 at a portion opposing to the reflection film 68. Provision of the thickness adjusting layer 98 brings about an effect of substantially reducing the thickness of the liquid crystal LC by half. In other words, an effective optical path is adjustable at the portion opposite to the reflection film 68. Furthermore, in the case of using a VA (vertical orientation) type liquid crystal, the thickness adjusting layer 98 can be used as an orientation control projection. Alternatively, for the orientation control, an orientation control projection can be independently formed at a predetermined position on the opposed electrode 94 of each pixel.

Furthermore, a polarizing plate and an optical retardation plate are provided outside the glass substrates 50 and 90. An orientation film is provided between the opposed electrode 94 and the liquid crystal LC as well as between the pixel electrode 64 and the liquid crystal LC.

According to the above-described arrangement, when the TFT (i.e., selecting transistor Q1) containing the semiconductor layer 72 turns on, a data voltage of the data line DL is applied to the pixel electrode 64. The data voltage is thus applied to the liquid crystal LC existing in a space intervening between the pixel electrode 64 and the opposed electrode 94. Hence, the pixel can realize the display depending on a given data voltage.
As shown in Fig. 4, the reflection film 68 extends over the selecting transistor Q1 and the holding capacitor C. This portion functions as a reflection type LCD. Accordingly, the entire pixel region can be used as a liquid crystal display section.

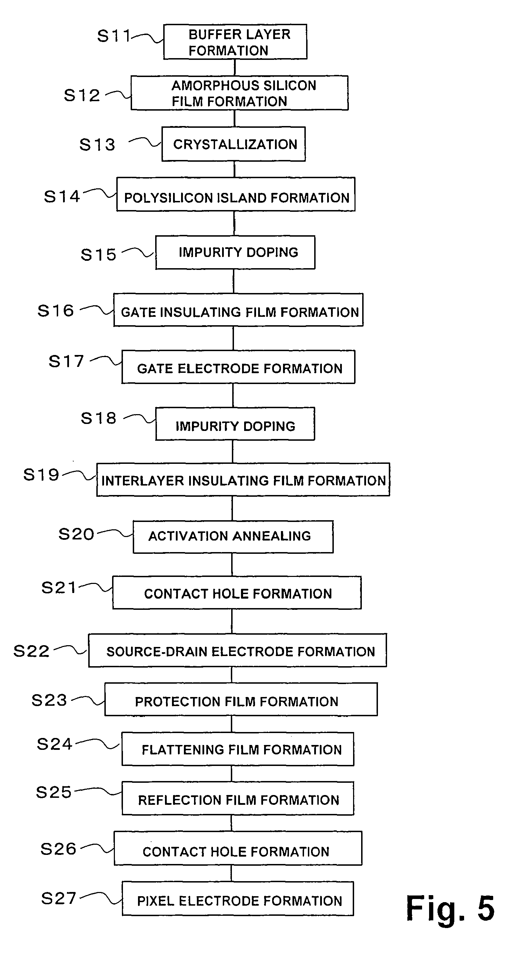

Next, manufacturing processes will be described with reference to Figs. 5, 6, and 7A-7B through 15A-15B.

First of all, a TFT forming process is performed.

The TFT forming process includes forming the buffer layer 52 on the entire surface of the glass substrate 50 (refer to step S11) and forming an amorphous silicon (a-Si) film on the buffer layer 52 (refer to step S12). The buffer layer 52 is a SiO₂/SiN laminate film having a thickness of about 100 nm to about 200 nm. The a-Si film has a thickness of about 30 nm to about 50 nm. Both the buffer layer 52 and the a-Si film are formed by plasma CVD. Through the TFT forming process, a laminate film of a-Si/SiO₂/SiN/glass (i.e., glass substrate) is formed on the glass substrate 50.

Next, the laminate film on the glass substrate 50 is irradiated with a laser (referred to as "laser annealing") to crystallize the amorphous silicon film at a low temperature (refer to step S13). The crystallized amorphous silicon forms a polysilicon layer.

Next, the obtained polysilicon layer is patterned to form a polysilicon island (i.e. semiconductor layer 72) at a predetermined portion (refer to step S14). Then, a resist pattern is formed by photolithography. An impurity (e.g., phosphorus) is doped into a source-drain region of an n-channel TFT (refer to step S15).

Next, the gate insulating film 54 made of a SiNx/SiO₂ laminate film is formed on the entire surface of the substrate including the semiconductor layer 72 (refer to step S16).

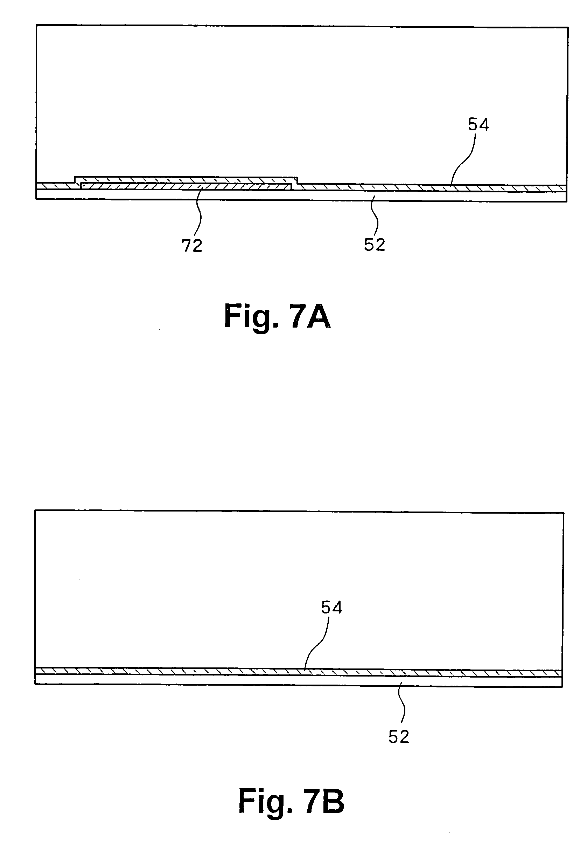

Through the above process, the gate insulating film 54 covering the semiconductor 72 is formed in the pixel area, as shown in Fig. 7A. The semiconductor 72 made of a polysilicon is in the region where the TFT or the capacitor is formed. On the other hand, in the COG terminal area, the gate insulating film 54 is formed on the buffer layer 52 as shown in Fig. 7B.

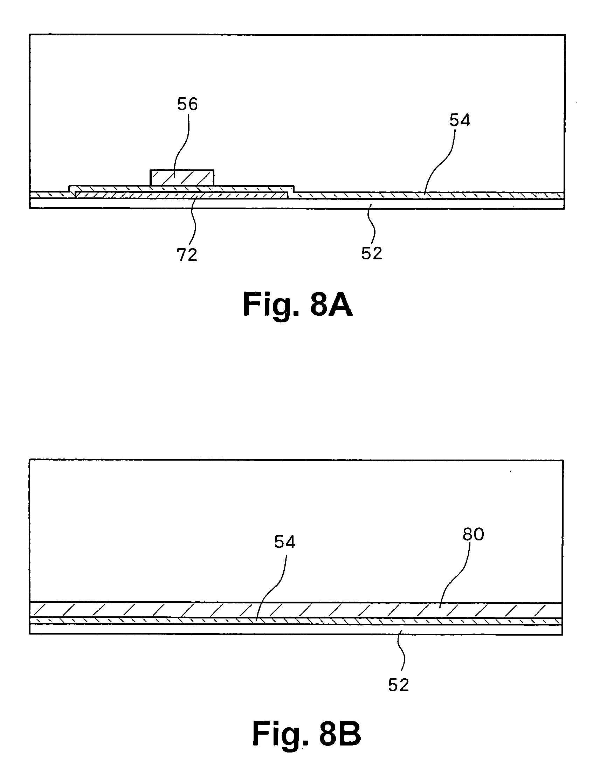

Next, as shown in Fig. 8A, the gate electrode 56 is formed by sputtering on the gate insulating film 54 at a position just above the channel region 72c of the semiconductor layer 72 (refer to step S17). The gate electrode 56 is a molybdenum (Mo) film having a thickness in a range from about 200 nm to about 300 nm. The gate electrode 56 is arranged at part of the gate line GL. Both the SC line SC and the gate line GL are formed in the same process. The semiconductor layer 72 formed for the holding capacitor is opposite to the SC line SC via the gate insulating film 54, so as to form the holding capacitor C. Furthermore, when the gate electrode 56 is formed in the pixel area, the molybdenum wiring 80 is formed together with the gate electrode 56 in the COG terminal area as shown in Fig. 8B, as the same process.

After accomplishing formation of the gate line GL, an impurity (e.g., boron) is doped into a source-drain region of a p-channel TFT in a peripheral circuit (refer to step S18). This is performed, using photolithography, by ion doping boron with a mask of a resist formed in a region other than the region requiring the doping. In this case, no processing (including the impurity doping) is performed in the COG terminal area.

Next, the interlayer insulating film 60 of SiO₂/SiNx is formed on the entire surface of the substrate by plasma CVD (refer to step S19). The thickness is, for example, in a range from about 400 nm to about 700 nm. After the interlayer insulating film 60 is formed, an activation annealing accompanied with a heat treatment is performed to activate the region where the impurity is doped (refer to step S20). This assures sufficient shifting of carriers in these regions.

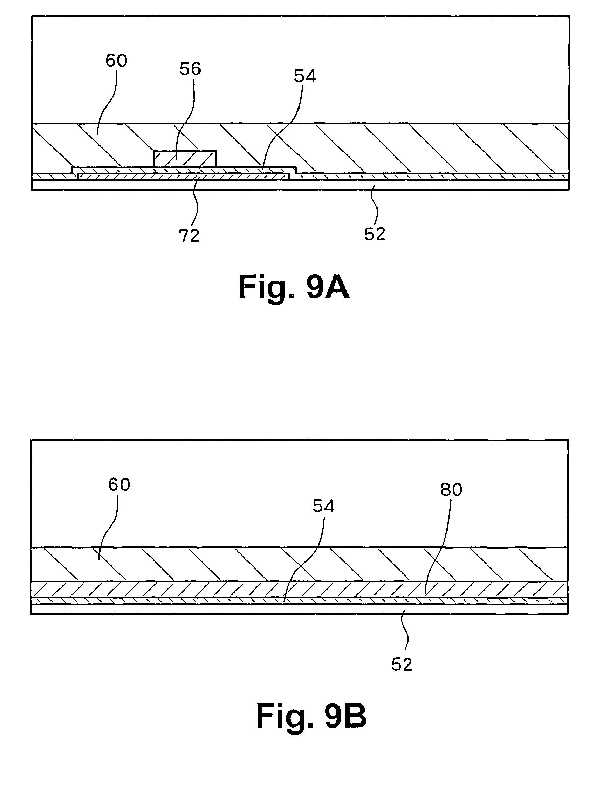

Through the above process, as shown in Figs. 9A and 9B, the interlayer insulating film 60 is formed in the pixel area and also the interlayer insulating film 60 is formed in the COG terminal area. As no impurity doping is performed in the COG terminal area, no activation occurs in this region.

Furthermore, contact holes extending vertically across the interlayer insulating film 60 and the gate insulating film 54 are formed, by photolithography and wet etching, at positions corresponding to the source and drain regions of the semiconductor layer 72 (refer to step S21). In this case, with respect to the interlayer insulating film 60 positioned on the molybdenum wiring 80 in the COG terminal area, a contact hole 20 is formed at an inner end portion and the removed portion 18 is formed at the terminal area.

Next, the data line DL (i.e., source electrode) and the drain electrode 74 are formed (refer to step S22). When data line DL and the drain electrode 74 are formed, the contact holes are filled with conductive materials of the data line DL and the drain electrode 74. In other words, formation of the data line DL and the drain electrode 74 closes or covers the contact holes. Furthermore, the data line DL of each column extends toward the peripheral portion and reaches, at its end, the contact hole. Accordingly, the data line DL is connected via the contact to the molybdenum wiring 80. Furthermore, the connection wiring 10 covering the removed portion 18 in the COG terminal area is formed together with the data line DL.

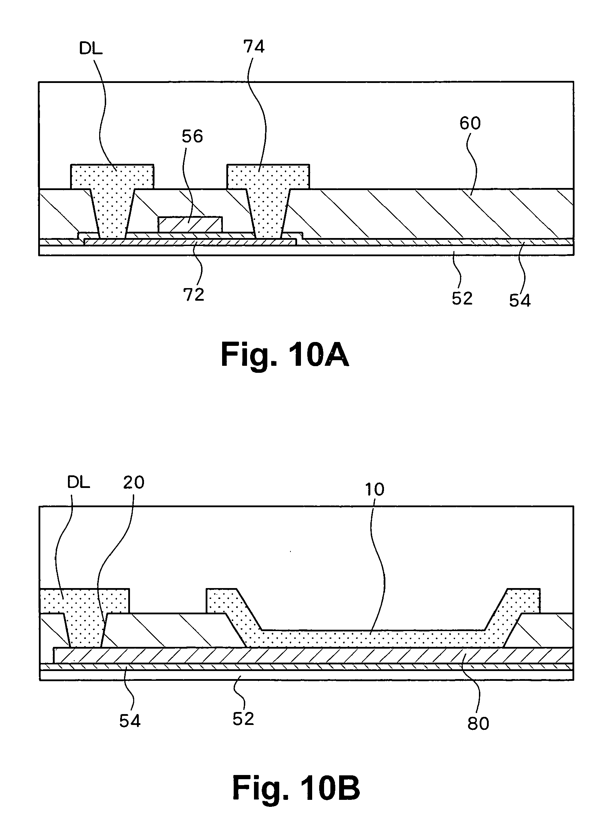

Through the above process, as shown in Fig. 10A, a source electrode (i.e., data line DL) and a drain electrode are formed in the pixel area. On the other hand, in the COG terminal area, the data line DL is connected to the molybdenum wiring 80 via the contact extending across the interlayer insulating film 60. The connection wiring 10 is formed on the molybdenum wiring 80 so as to be positioned in the removed portion 18, as shown in Fig. 10B.
These members are formed, by photolithography and wet etching, after a laminate film of Mo/A1-Nd/Mo (having a thickness in a range from about 400 nm to about 800 nm) is formed by sputtering.

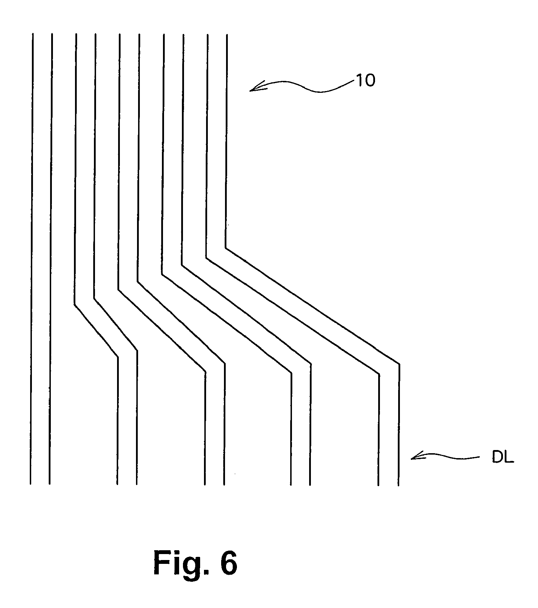

Data lines DL extend parallel to each other in the vertical direction and are disposed at predetermined intervals so as to sufficiently cover a lateral width of the display section. Meanwhile, connection wiring 10 have the nature of being connected to the horizontal driver IC. This is the reason why a clearance of neighboring connection wiring 10 is smaller than a clearance of neighboring data lines DL, as partly shown in Fig. 6.

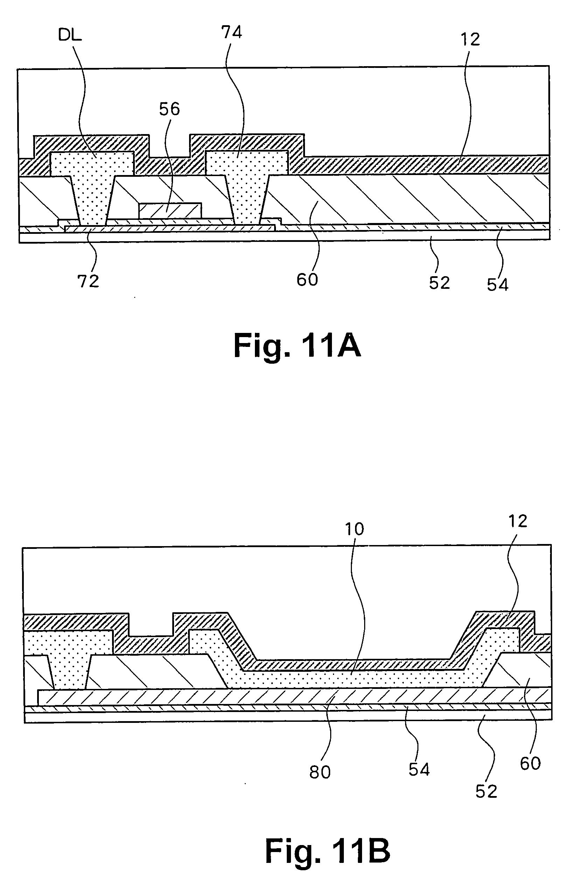

Next, the protection film 12 made of SiNx is formed entirely on the upper surface of the substrate (refer to step S23). Accordingly, as shown in Figs. 11A and 11B, the protection film 12 covers the surface extensively.

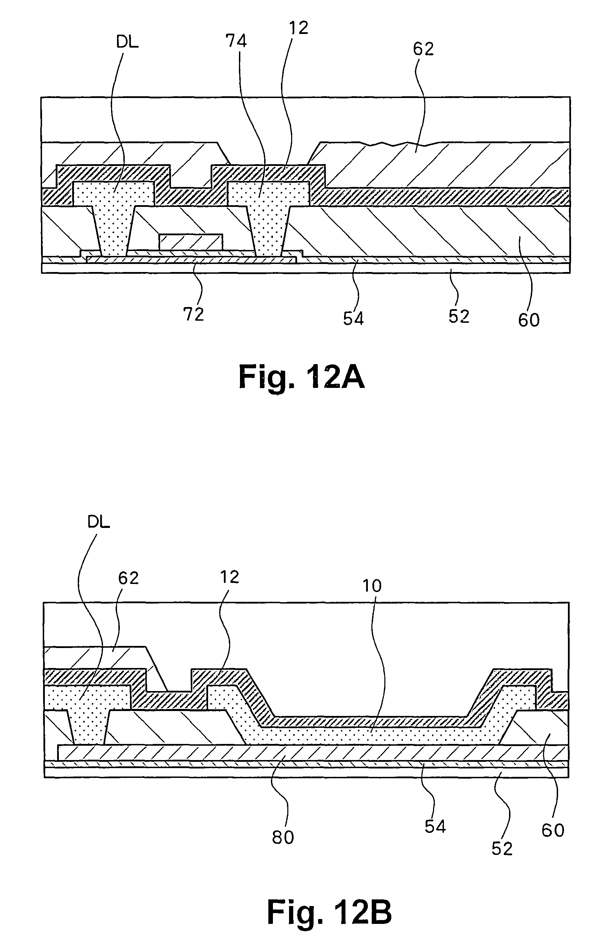

Next, the flattening film 62 of an acrylic resin is formed entirely on the upper surface of the substrate (refer to step S24). The flattening film 62 is then partly removed by photolithography. The removed portion of the flattening film 62 corresponds to an upper portion of the drain electrode 74 of each pixel. In the COG terminal area, the flattening film 62 is removed in a region outside the terminal end of the data line DL and accordingly the protection film 12 is exposed. More specifically, as shown in Figs. 12A and 12B, in the pixel area, the flattening film 62 positioned on the connection wiring 10 is removed when the contact hole is formed in the flattening film 62. Furthermore, when the contact hole is formed, an uneven surface is formed with light having uneven exposure at a predetermined region on the flattening film 62 where the reflection film 68 is formed.

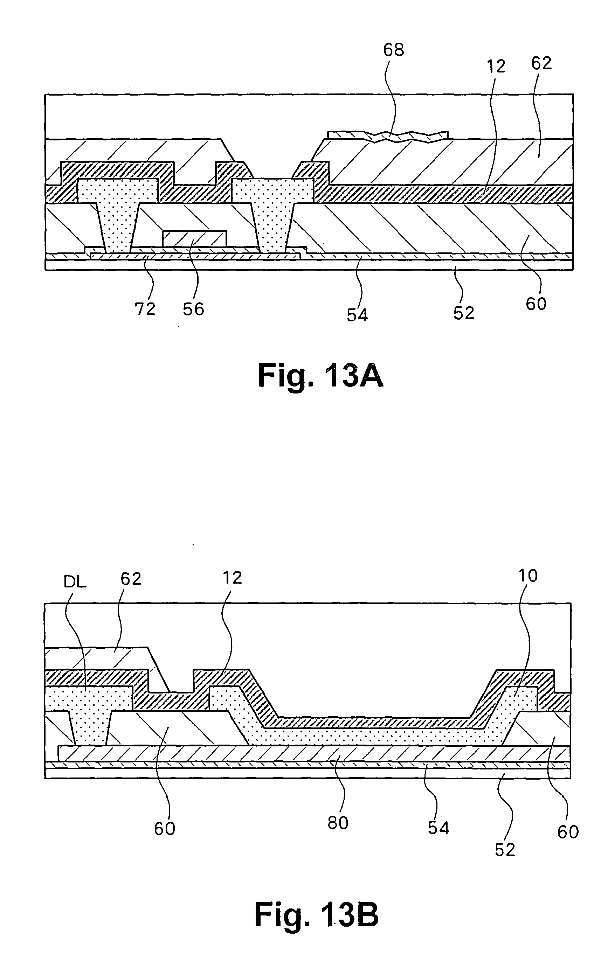

Next, as shown in Fig. 13A, in the pixel area, after forming the reflection film 68 made of Al-Nd is formed by sputtering on the flattening film 62, such an uneven surface is formed by photolithography and wet etching (refer to step S25). On the other hand, as shown in Fig. 13B, nothing is formed on the flattening film 62 in the COG terminal area.

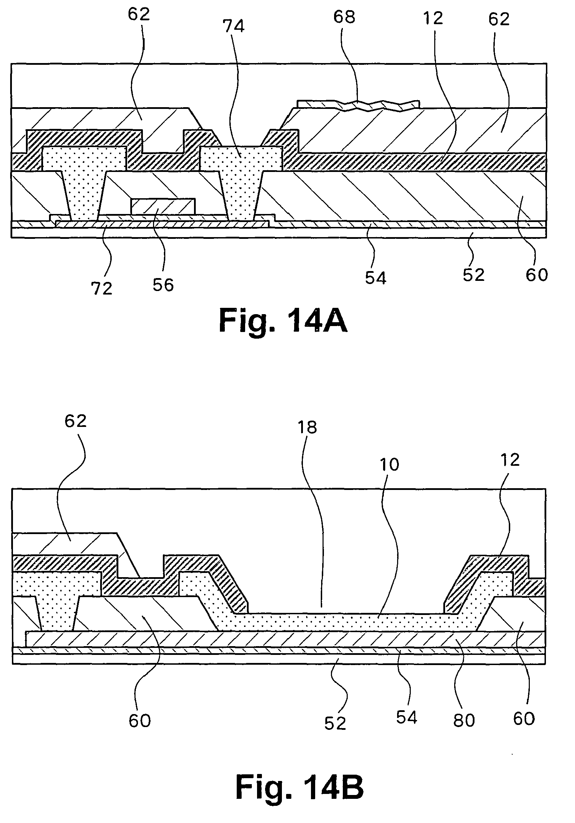

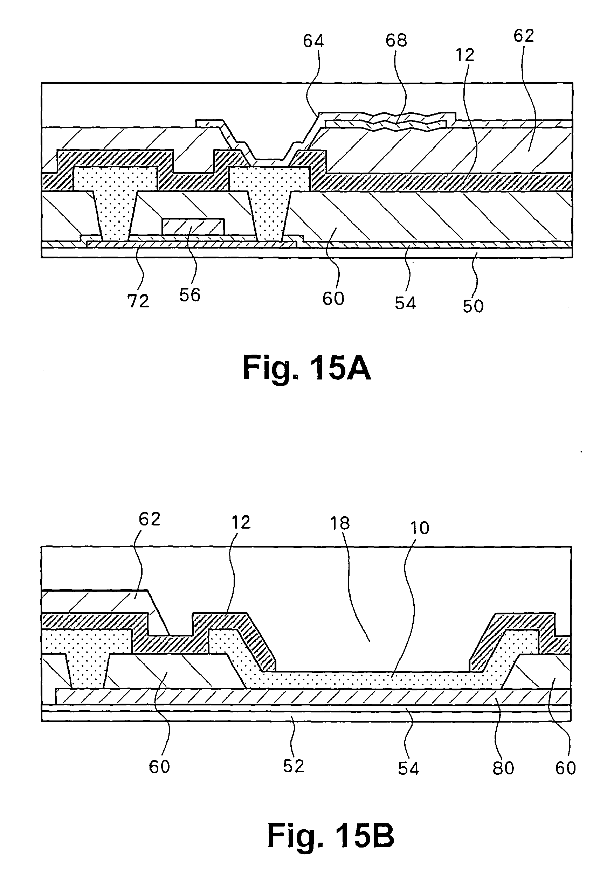

Next, the protection film 12 on the drain electrode 74 and the protection film 12 on the removed portion 18 in the COG terminal area are removed by photolithography and wet etching to form contact holes (refer to step S26). Through this process, as shown in Figs. 14A and 14B, an upper surface of the drain electrode 74 and the connection wiring 10 in the removed portion 18 are exposed.
Then, as shown in Fig. 15A, in the pixel area, the pixel electrode 64 made of IZO is formed (refer to step S27). In this case, as shown in Fig. 15B, the COG terminal area maintains the state of the previous process.

If the panel is a transmissive type, the reflection film 68 is not formed.

As described above, the COG terminal area shown in Fig. 1 can be formed using the processes applied to the pixel area. Furthermore, the ACF 24 containing an appropriate number of conductive particles 24a is disposed on the connection wiring 10 in a recessed COG terminal area. Also, the bump 26a of the horizontal driver IC is connected to the connection wiring 10 via the conductive particles 24a.

The above-described arrangement is for an output terminal area of the horizontal driver IC. A similar arrangement can be used for an input terminal area of the horizontal driver IC. A similar COG terminal is provided on a substrate, and a similar COG structure is used for connection.

Furthermore, an FPC terminal area is formed in the periphery of the COG terminal area. External signal lines (e.g. , FPC and the like) are connected to the FPC terminal area. The FPC terminal area has an electrode surface whose material is IZO or ITO formed together with the pixel electrode in the same process.

As described above, according to the disclosed embodiment, the COG terminal area to which the horizontal driver IC is connected uses a metal identical with the metal for the data line DL that has a three-layer structure consisting of the layers of molybdenum (Mo), aluminum (Al) or aluminum alloy (AlNd), and molybdenum (Mo). Accordingly, in the connection using the COG structure, the contact resistance can be reduced. Furthermore, forming the COG terminal area according to the embodiment only requires removing the flattening film. Thus, the rigidity of the COG terminal area is sufficient and connection is ensured.

Moreover, in the area other than the removed portion 18, the data line DL and the connection wiring 10 are covered with the protection film or the flattening film. Thus, protection is sufficient.

Furthermore, the connection wiring 10 is provided without using the flattening film 62. Therefore, a sufficient pressure can be applied to the conductive particles 24a when the horizontal driver IC is pressed and fixed.

The arrangement of the embodiment can be applied to a transmissive type, a semitransmissive type, or a full-reflection type panel.

While the present invention has been described with reference to an exemplary embodiment, it is to be understood that the invention is not limited to the disclosed exemplary embodiment. The scope of the following claims is to be accorded the broadest interpretation so as to encompass all modifications, equivalent structures and functions. This application claims priority from earlier Japanese Patent Applications No. 2004-338904 and 2005-332182 filed November 24, 2004 and November 16, 2005, which is hereby incorporated herein by reference in its entirety.

## Claims

1. An active matrix display device having a COG (chip on glass) terminal area directly connected to an external semiconductor integrated circuit (26) at a peripheral portion of the display device,
**characterized by**
a connection wiring (10) electrically connected to an internal wiring connected to a pixel provided in a display panel, the connection wiring (10) being an aluminum or aluminum alloy wiring disposed at a peripheral portion of the panel;
a wiring protection film (12) covering the connection wiring (10); and
an opening (18) formed at a portion corresponding to a terminal area of the wiring protection film (12).

2. The active matrix display device according to claim 1, wherein
the internal wiring is a data line (DL) supplying a data signal to the pixel provided in a display panel,
the pixel includes a thin-film transistor having one end connected to the data line (DL) and a transistor protection film covering the thin-film transistor, and
the wiring protection film (12) and the transistor protection film are formed in the same process.

3. The active matrix display device according to claim 2, wherein
the thin-film transistor includes a semiconductor layer (72), a gate insulating film (54) covering the semiconductor layer (72), a gate electrode (56) provided on the gate insulating film (54) at a portion above a channel region (72c) of the semiconductor layer (72), and an interlayer insulating film (60) covering the gate electrode (56) and the gate insulating film (54),
the data line (DL) is disposed on the interlayer insulating film (60), and
the data line (DL) and the connection wiring (10) are spaced with the interlayer insulating film (60), and are electrically connected via wiring (80) formed together with the gate electrode (56) in the same process.

4. The active matrix display device according to claim 3, wherein the data line (DL) and the connection wiring (10) are spaced with the interlayer insulating film (60) and the wiring protection film (12).

5. The active matrix display device according to any one of claims 1 to 4, wherein the wiring protection film (12) is a silicon nitride film.

6. A method for manufacturing an active matrix display device having a COG terminal area directly connected to an external semiconductor integrated circuit at a peripheral portion of the display device,
**characterized by** the steps of:
forming connection wiring (10) electrically connected to internal wiring connected to a pixel provided in a display panel, the connection wiring (10) being aluminum or aluminum alloy wiring disposed at a peripheral portion of the panel;
covering the connection wiring (10) with a wiring protection film (12); and
forming an opening (18) at a portion corresponding to a terminal area of the wiring protection film (12).

7. The method for manufacturing the display device according to claim 6, wherein
the internal wiring is a data line (DL) supplying a data signal to the pixel provided in a display panel,
the pixel includes a thin-film transistor having one end connected to the data line (DL) and a transistor protection film covering the thin-film transistor, and
the method includes a step of forming the wiring protection film (12) and the transistor protection film in the same process.

8. The method for manufacturing the display device according to claim 7, wherein
the thin-film transistor includes a semiconductor layer (72), a gate insulating film (54) covering the semiconductor layer (72), a gate electrode (56) provided on the gate insulating film (54) at a portion above a channel region (72c) of the semiconductor layer (72), and an interlayer insulating film (60) covering the gate electrode (56) and the gate insulating film (54), and
the method further includes steps of:
disposing the data line (DL) on the interlayer insulating film (60);
spacing the data line (DL) and the connection wiring (10) with the interlayer insulating film (60); and
electrically connecting the data line (DL) and the connection wiring (10) via wiring (80) formed together with the gate electrode (56) in the same process.

9. The method for manufacturing the display device according to claim 8, wherein data line (DL) and the connection wiring (10) are spaced with the interlayer insulating film (60) and the wiring protection film (12).

10. The method for manufacturing the display device according to any one of claims 6 to 9, wherein the wiring protection film (12) is a silicon nitride film.
